# DEMANDE DE BREVET EUROPEEN

(11) **EP 3 964 048 A1**
(43) Date de publication de la demande: **09.03.2022**
(21) Numéro de dépôt: 21195554.7
(22) Date de dépôt: 08.09.2021
(51) Int. Cl.: A01G 9/00, A01G 9/02, A47G 7/08

(54) **ENSEMBLE POUR PLANTE COMPORTANT UN RECIPIENT ET UN MANCHON DECORATIF**

(30) Priorité: 08.09.2020 FR 2009091
(71) Demandeur: Poetic, 71370 Saint Germain du Plain (FR)
(72) Inventeur: BOUILLARD, Victor, 71100 CHALON SUR SAONE (FR)
(74) Mandataire: Be IP

(57) **Abrégé**

La présente invention concerne un ensemble pour plante du type comprenant :
- un récipient - par exemple tronconique en matière plastique - comportant au moins une cloison latérale, un fond, et une ouverture supérieure,
- un manchon - par exemple tronconique - dans lequel le récipient - par exemple tronconique - est destiné à être inséré, le manchon incluant une paroi latérale ayant des bords supérieur et inférieur définissant un orifice inférieur et un orifice supérieur, la paroi latérale du manchon comportant une bande de matériau sensiblement non déformable et étant destinée à s'étendre autour de ladite et au moins une cloison latérale,
***remarquable en ce que*** la paroi latérale du manchon comporte en outre une bande longitudinale de matière déformable à retour de forme s'étendant entre les bords supérieur et inférieur de la paroi latérale du manchon.

## Description

### DOMAINE DE L'INVENTION

La présente invention concerne le domaine technique général des récipients pour plante - tels que les jardinières ou les pots.

Plus précisément, la présente invention concerne un ensemble comprenant :
- un récipient - notamment en matière plastique - destiné à recevoir une composition florale, et
- un manchon décoratif.

### ARRIERE PLAN DE L'INVENTION

Les systèmes de plantes en pot sont bien connus dans l'art et sont des moyens efficaces pour acheter et transporter des plantes.

Un système de plante en pot classique comprend :
- un récipient ayant un fond et une (ou plusieurs) cloison(s) latérale(s),
- de la terre et un végétal (arbuste, plante, fleur, etc.) contenus dans le récipient.

De manière classique, le récipient est noir ou non décoré. Par conséquent, il est souhaitable que l'utilisateur replante le végétal dans un récipient esthétiquement agréable.

Même lorsque le récipient est décoré, l'utilisateur peut se lasser de l'ornement de son récipient. Dans ce cas, il est également nécessaire que l'utilisateur remplace le récipient contenant le végétal.

Or, le végétal peut être difficile à replanter, et une telle manipulation peut en outre endommager la plante.

Un but de la présente invention est de proposer un ensemble pour plante permettant de pallier au moins l'un des inconvénients précités.

### BREVE DESCRIPTION DE L'INVENTION

A cet effet, l'invention propose un ensemble pour plante du type comprenant :
- un récipient - par exemple tronconique en matière plastique - comportant au moins une cloison latérale, un fond, et une ouverture supérieure,
- un manchon - par exemple tronconique - dans lequel le récipient - par exemple tronconique - est destiné à être inséré, le manchon incluant une paroi latérale ayant des bords supérieur et inférieur définissant un orifice inférieur et un orifice supérieur, la paroi latérale du manchon comportant une bande de matériau sensiblement non déformable et étant destinée à s'étendre autour de ladite et au moins une cloison latérale,
***remarquable en ce que*** la paroi latérale du manchon comporte en outre une bande longitudinale de matière déformable à retour de forme s'étendant entre les bords supérieur et inférieur de la paroi latérale du manchon.

On entend, dans le cadre de la présente invention, par *« matériau non déformable »*, un matériau qui conserve sa géométrie quand des efforts mécaniques (par exemple d'élongation ou de rétraction) sont appliqués sur ledit matériau. A l'inverse, un *« matériau déformable »* est entendu comme étant un matériau dont la géométrie varie lorsque des forces mécaniques (d'étirement ou de compression) sont appliquées sur ledit matériau.

Des aspects préférés mais non limitatifs de l'ensemble selon l'invention sont les suivants :
- la bande longitudinale de matière déformable à retour de forme peut avoir une largeur comprise entre 1 et 3 centimètres, préférentiellement sensiblement égale à 2 centimètres ;
- la largeur de la bande longitudinale peut varier entre ses extrémités ;
- la (ou les) cloison(s) latérale(s) du récipient peut comporter des aspérités sur sa face externe ;
- dans certaines variantes de réalisation :
   ∘ les dimensions - par exemple le diamètre - de l'orifice supérieur du manchon peuvent être inférieures ou égales aux dimensions - par exemple le diamètre - de l'ouverture supérieure du récipient,
   ∘ les dimensions - par exemple le diamètre - de l'orifice inférieur du manchon peuvent être inférieures ou égales aux dimensions - par exemple le diamètre - du fond du récipient ;
- l'ensemble peut également comprendre une soucoupe clipsable sur le fond du récipient, ladite soucoupe comportant une base plane et une jupe périphérique définissant une lumière supérieure, les dimensions - par exemple le diamètre - de la lumière supérieure de la soucoupe étant supérieures aux dimensions - par exemple le diamètre - de l'orifice inférieur du manchon ;
- une portion (ou la totalité) de la face interne du manchon peut comprendre une couche de matière adhérente, notamment une couche de matière ayant un coefficient de frottement supérieur ou égal à 0,5 ;
- en particulier, la face interne de la bande longitudinale de matière déformable à retour de forme peut comprendre une couche de matière adhérente, notamment une couche de matière ayant un coefficient de frottement supérieur ou égal à 0,5 ;
- le manchon peut être dépourvu de fond ;
- la bande de matériau sensiblement non déformable et la bande longitudinale de matière déformable à retour de forme peuvent être fixées ensemble par collage, soudage ou couture ;
- le récipient et le manchon peuvent être de forme tronconique.

### BREVE DESCRIPTION DES DESSINS

D'autres avantages et caractéristiques de l'ensemble selon l'invention ressortiront mieux de la description qui va suivre de plusieurs variantes d'exécution, données à titre d'exemples non limitatifs, à partir des dessins annexés sur lesquels :
- La figure 1 est une vue en perspective éclatée d'un premier mode de réalisation d'un ensemble pour plante,
- La figure 2 est une vue en perspective du premier mode de réalisation après assemblage des différents éléments de l'ensemble pour plante,
- La figure 3 est une vue en perspective d'un deuxième mode de réalisation de l'ensemble pour plante.

### DESCRIPTION DETAILLEE DE L'INVENTION

On va maintenant décrire différents exemples d'ensemble pour plante selon l'invention en référence aux figures. Dans ces différentes figures, les éléments équivalents sont désignés par la même référence numérique.

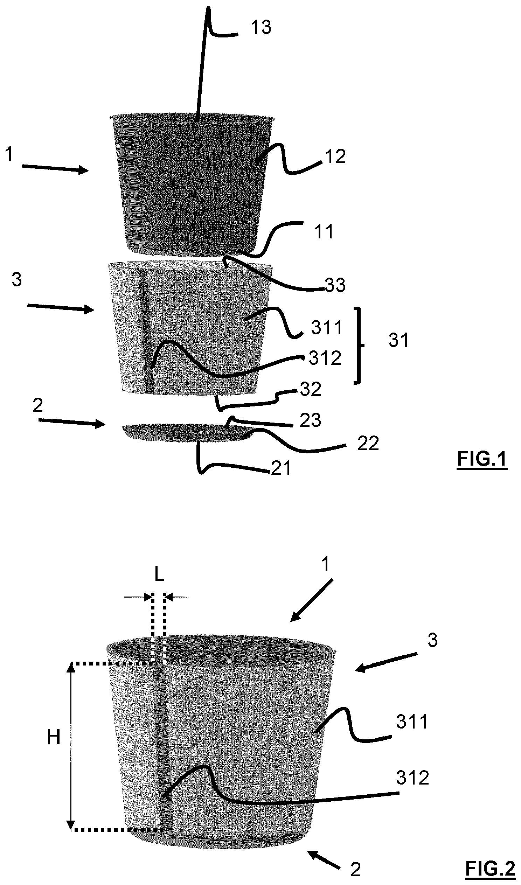

En référence à la figure 1, on a illustré un mode de réalisation de l'ensemble pour plante selon l'invention. Cet ensemble comprend un récipient 1, optionnellement une soucoupe 2 de récupération d'eau, et un manchon décoratif 3.

Comme illustré à la figure 2, la soucoupe 2 est adaptée pour être positionnée sous le récipient 1, tandis que le manchon 3 est adapté pour être positionné autour du récipient 1, le manchon 3 s'étendant au-dessus de la soucoupe 2 lorsque le récipient 1, la soucoupe 2 et le manchon 3 sont assemblés.

### 1. Récipient

Le récipient 1 est destiné à recevoir de la terre et des plantes constituant une composition florale décorative.

Le récipient 1 peut être en plastique injecté ou en tout autre matériau connu de l'homme du métier. Il peut présenter différentes formes (tronconique, cylindrique, cubique, etc.) en fonction de l'application visée.

Dans le mode de réalisation illustré à la figure 1, le récipient 1 est de forme générale tronconique. Le récipient comprend un fond 11 (éventuellement perforé), une cloison latérale 12 et une ouverture 13 dans sa partie supérieure opposée au fond 11.

Le fond 11 peut inclure des trous traversants (non représentés) formant des perforations permettant l'évacuation des surplus d'eau d'arrosage.

La cloison latérale 12, qui va en s'évasant vers le haut, peut inclure un rebord 14 s'étendant autour du récipient 1 au niveau de son ouverture supérieure 13. Par ailleurs, la face externe de la cloison latérale 12 peut comprendre une (ou plusieurs) aspérité(s) s'étendant en saillie vers l'extérieur de la cloison latérale 12. Ceci permet d'augmenter la rugosité de surface de la face externe de la cloison latérale 12. En variante, la face externe de la cloison latérale 12 peut être lisse.

Le fond 11 et la cloison latérale 12 peuvent être monoblocs, de sorte que le récipient 1 dans son ensemble peut être fabriqué en une étape de moulage unique à partir d'un seul dispositif de moulage. Ceci permet de limiter les coûts associés à la fabrication du récipient.

### 2. Soucoupe

La soucoupe 2 permet la récupération des surplus d'eau d'arrosage. Elle comporte une base 21 et une jupe périphérique 22. La soucoupe 2 est destinée à recevoir le récipient 1.

La base 21 est sensiblement plane. La forme de la base 21 est adaptée à la forme du récipient 1 avec lequel la soucoupe 2 est destinée à coopérer. Notamment, dans le cas d'un récipient 1 tronconique, la base 21 peut être circulaire. Bien entendu, la base 21 peut avoir d'autres formes (carrée, rectangulaire, triangulaire, etc.) connues de l'homme du métier en fonction de la forme du récipient 1.

La jupe périphérique 22 est solidaire du (ou des) bord(s) périphérique(s) de la base 21. Plus précisément, le (ou les) bord(s) inférieur(s) de la jupe 22 est (sont) solidaire(s) du (ou des) bord(s) périphérique(s) de la base 21. Le (ou les) bord(s) libre(s) de la jupe périphérique 22 défini(ssen)t une lumière supérieure 23 dont les dimensions (i.e. le diamètre dans le cas de la figure 1) sont supérieures aux dimensions du fond 11 du récipient 1. Ceci permet l'insertion du récipient 1 dans la soucoupe 2.

Dans le mode de réalisation illustré à la figure 1, la jupe 22 est composée d'un pan de forme générale tronconique allant en s'évasant dans une direction opposée à la base 21. La jupe 22 est destinée à entourer partiellement le récipient 1. Plus précisément, la jupe 22 est adaptée pour s'étendre autour du fond 11, et autour d'une portion inférieure de la paroi latérale 12 du récipient 1.

Bien entendu, la jupe 22 peut présenter d'autres formes en fonction notamment de la forme du récipient 1.

Dans certains modes de réalisation, la soucoupe peut être clipsable sur le fond du récipient. Plus précisément, le récipient 1 et la soucoupe 2 peuvent comprendre des moyens d'enfichage complémentaires permettant de solidariser la soucoupe sur le récipient 1. De tels moyens d'enfichage sont bien connus de l'homme du métier et ne seront pas décrits plus en détails dans la suite.

### 3. Manchon

Le manchon 3 est adapté pour entourer la paroi latérale 12 du récipient 1. Il constitue un élément décoratif de l'ensemble pour plante selon l'invention.

Dans le mode de réalisation illustré aux figures 1 et 2, le manchon 3 est destiné à venir en contact avec la face externe de la cloison latérale 12.

Le manchon 3 présente une forme complémentaire à la forme de la cloison latérale 12 du récipient 1. Notamment dans le mode de réalisation illustré aux figures 1 et 2, le manchon 3 est composé d'une paroi latérale 31 de forme tronconique définissant des orifices inférieur et supérieur 32, 33. L'orifice inférieur 32 du manchon 3 est destiné à s'étendre sensiblement dans le plan du fond 11 du récipient 1. L'orifice supérieur 33 du manchon 3 est destiné à s'étendre dans le plan de l'ouverture supérieure 13 du récipient 1.

Lorsque le manchon 3 et le récipient 1 ne sont pas assemblés, les dimensions des orifices 32, 33 du manchon 3 peuvent être inférieures ou égales aux dimensions du fond 11 et de l'ouverture supérieure 13 du récipient 1. Ceci permet d'assurer un placage efficace du manchon sur le couvercle lorsque ceux-ci sont assemblés.

De préférence, lorsque le manchon 3 n'est pas emmanché sur le récipient 1 :
- les dimensions (le diamètre dans le cas de la figure 1) de l'orifice inférieur 32 du manchon 3 sont inférieures aux dimensions du fond 11 du récipient 1 (par exemple inférieures de 0.1 à 10 millimètres),
- les dimensions (le diamètre dans le cas de la figure 1) de l'orifice supérieur 33 du manchon 3 sont inférieures aux dimensions de l'ouverture supérieure 13 du récipient 1 (par exemple le diamètre de l'orifice supérieur est inférieure de 1 à 10 millimètres par rapport au diamètre de l'ouverture supérieure).

Ceci permet de tenir compte des tolérances de fabrication, et d'assurer un placage du manchon sur le récipient même lorsque les dimensions du récipient varient de quelques millimètres.

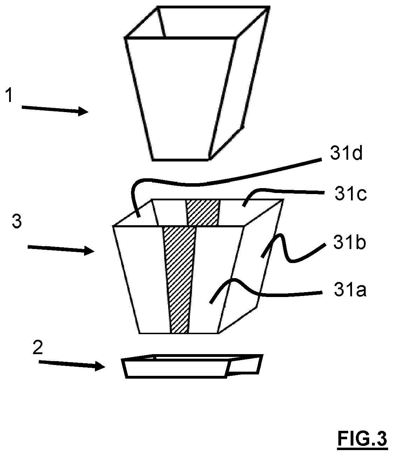

Bien entendu, la forme du manchon 3 peut varier en fonction de la forme du récipient 1. Notamment, dans le cas d'un récipient 1 parallélépipédique tel qu'illustré à la figure 3, le manchon 3 peut être de forme parallélépipédique. Dans ce cas, le manchon 3 comporte quatre parois latérales 31a, 31b, 31c, 31d. Une (31a), chacune (31a-31d) ou certaines (31a, 31c) de ces parois latérales peuvent être du type décrit ci-dessous en référence à la figure 1.

La (ou chaque) (ou certaines des) paroi(s) latérale(s) 31 du manchon 3 comprend (comprennent) :
- une bande de matière non déformable 311, telle qu'un tissu ou un cuir ou un plastique ou un carton ou une résine, et
- une bande de matière déformable 312 à retour de forme, telle qu'une bande élastique.

Ces bandes de matière non déformable et déformable sont avantageusement solidaires l'une de l'autre. Ces bandes peuvent notamment être fixées ensemble par tout moyen connu de l'homme du métier. Elles peuvent notamment être fixées ensemble par collage, soudage ou couture, le choix d'un mode de fixation dépendant notamment des matériaux constituant les bandes de matière non déformable et déformable.

La bande de matière déformable 312 à retour de forme permet de faire varier le volume intérieur du manchon 3 de sorte à assurer que la face interne du manchon 3 vienne en contact intime avec la face externe de la cloison latérale 12.

La bande de matière déformable 312 à retour de forme s'étend sur toute la hauteur H de la paroi latérale 31, c'est-à-dire qu'elle s'étend entre les orifices inférieur 32 et supérieur 33 du manchon 3. La largeur L (c'est-à-dire sa dimension selon une direction perpendiculaire à la hauteur du manchon) de la bande de matière déformable 312 à retour de forme peut être comprise entre 1 et 3 centimètres. Dans le mode de réalisation illustré à la figure 1, la largeur radiale de la bande de matière déformable 312 à retour de forme est sensiblement égale à 2 centimètres.

La face interne du manchon 3 peut comprendre une couche de matière adhérente - telle qu'une couche de silicone - pour augmenter le coefficient de frottement entre la face externe de la cloison latérale 12 et la face interne de la paroi latérale 31. La couche de matière adhérente peut être constituée dans tout matériau connu de l'homme du métier et ayant un coefficient de frottement supérieur ou égal à 0,5. Cette couche de matière adhérente peut s'étendre :
- sur la totalité ou une partie de la face interne de la bande de matière non déformable 311, et/ou
- sur tout ou partie de la face interne de la bande de matière déformable 312 à retour de forme.

Avantageusement, les dimensions (i.e. le diamètre dans le cas de la figure 1) de l'orifice inférieur 32 du manchon 3 peuvent être choisies inférieures ou égales aux dimensions de la lumière supérieure 23 de la soucoupe 2. Ceci permet d'assurer que le bord libre inférieur du manchon 3 vienne en contact avec :
- le bord libre supérieur de la jupe périphérique de la soucoupe (si les dimensions de l'orifice inférieur et de la lumière supérieure sont sensiblement égales), ou avec
- la base 21 ou la face interne de la jupe périphérique 22 (notamment si les dimensions de l'orifice inférieur sont plus petites que les dimensions de la lumière supérieure),
afin d'assurer le maintien en position du manchon 3 sur le récipient 1.

### 4. Principe d'assemblage

Le principe d'assemblage de l'ensemble pour plante est le suivant.

L'utilisateur commence par assembler le récipient 1 et le manchon 3. Il insère le fond 11 du récipient 1 au niveau de l'orifice supérieur 33 du manchon 3 et le déplace en direction de l'orifice inférieur 32. Au fil du déplacement du récipient 1 dans le manchon 3, la distance entre la cloison latérale 12 et la paroi latérale 31 diminue (du fait des formes évasées du récipient 1 et du manchon 3). Les dimensions des orifices inférieur et supérieur 32, 33 du manchon 3 étant respectivement inférieures aux dimensions du fond 11 et de l'ouverture supérieure 13 du récipient 1, la face externe de la cloison latérale 12 vient en contact avec la face interne de la paroi latérale 31 avant que le manchon 3 ne soit totalement emmanché sur le récipient 1. Lorsque la cloison latérale 12 et la paroi latérale 31 sont en contact, l'utilisateur continue de déplacer le récipient en direction de l'orifice inférieur du manchon. Les forces appliquées par la cloison latérale 12 sur la paroi latérale 31 induisent une déformation élastique de la bande de matière déformable 312 à retour de forme. La bande de matière déformable 312 à retour de forme se dilate pour compenser la différence de dimensions entre la cloison latérale 12 et la paroi latérale 31.

Une fois le manchon 3 en position, les forces de constriction exercées par la bande de matière déformable 312 à retour de forme - qui tend à vouloir revenir dans un état de repos non dilatée - comprime le manchon 3 contre la cloison latérale 12, ce qui assure le maintien en position du manchon 3 sur le récipient 1. Les éventuelles aspérités sur la face externe de la cloison latérale et/ou l'éventuelle couche de matière adhérente permettent en outre d'augmenter le coefficient de frottement entre le récipient 1 et le manchon 3, ce qui améliore encore le maintien en position du manchon 3 sur le récipient 1.

L'utilisateur assemble ensuite la soucoupe 2 sur le récipient 1 portant le manchon 3. L'utilisateur insère le fond 11 du récipient 1 dans la lumière supérieure de la soucoupe 2 et déplace le récipient en direction de la base 21 de la soucoupe 2. Les moyens d'enfichage du récipient 1 viennent en contact avec les moyens d'enfichage complémentaires de la soucoupe 2. La coopération des moyens d'enfichage induit la solidarisation de la soucoupe 2 sur le récipient 1. Le bord libre supérieur de la jupe périphérique 22 vient en contact avec le bord inférieur de la paroi latérale 31 du manchon 3, ce qui assure également le maintien en position du manchon 3 sur le récipient 1.

### 5. Autres variantes

En référence à la figure 3, on a illustré une deuxième variante de réalisation de l'invention.

Dans cette deuxième variante, le récipient 1, la soucoupe 2 et le manchon 3 sont de forme parallélépipédique.

Le manchon comprend quatre parois latérales 31a-31d solidaires entre elles le long de leurs bords longitudinaux.

Des première et troisième parois latérales 31a, 31c opposées comprennent chacune : une bande de matière non déformable, et une bande de matière déformable à retour de forme. Des deuxième et quatrième parois latérales 31b, 31d opposées comprennent chacune uniquement une bande de matière non déformable. La présence d'une bande de matière déformable à retour de forme sur deux des parois latérales permet d'assurer le placage du manchon 3 sur le récipient 1.

Le lecteur aura compris que de nombreuses modifications peuvent être apportées à l'invention décrite précédemment sans sortir matériellement des nouveaux enseignements et des avantages décrits ici.

Par exemple, dans certaines variantes de réalisation, le manchon peut comprendre un fond.

## Revendications

1. Ensemble pour plante du type comprenant :
- un récipient (1) comportant un fond (11), au moins une cloison latérale (12), et une ouverture supérieure (13),
- un manchon (3) dans lequel le récipient (1) est destiné à être inséré, le manchon (3) incluant une paroi latérale (31) ayant des bords inférieur et supérieur définissant respectivement un orifice inférieur (32) et un orifice supérieur (33), la paroi latérale (31) du manchon (3) comportant une bande de matériau sensiblement non déformable (311) et étant destinée à s'étendre autour de ladite et au moins une cloison latérale (12),
***caractérisé en ce que*** la paroi latérale (31) du manchon (3) comporte en outre une bande longitudinale de matière déformable à retour de forme (312) s'étendant entre les bords inférieur et supérieur de la paroi latérale (31) du manchon (3).

2. Ensemble pour plante selon la revendication 1, ***dans lequel*** la bande longitudinale de matière déformable à retour de forme (312) a une largeur comprise entre 1 et 3 centimètres, préférentiellement sensiblement égale à 2 centimètres.

3. Ensemble pour plante selon l'une quelconque des revendications 1 ou 2, ***dans lequel*** ladite et au moins une cloison latérale (12) du récipient (1) comporte des aspérités sur sa face externe.

4. Ensemble pour plante selon l'une quelconque des revendications 1 à 3, ***dans lequel*** :
- les dimensions de l'orifice inférieur (32) du manchon (3) sont inférieures aux dimensions du fond (11) du récipient (1),
- les dimensions de l'orifice supérieur (33) du manchon (3) sont inférieures aux dimensions de l'ouverture supérieure (13) du récipient (1).

5. Ensemble pour plante selon l'une quelconque des revendications 1 à 4, ***lequel*** comprend en outre une soucoupe (2) clipsable sur le fond (11) du récipient (1), ladite soucoupe (2) comportant une base plane (21) et une jupe périphérique (22) définissant une lumière supérieure (23), les dimensions de la lumière supérieure (23) étant supérieures ou égales aux dimensions de l'orifice inférieur (32) du manchon (3).

6. Ensemble pour plante selon l'une quelconque des revendications 1 à 5, ***dans lequel*** au moins une portion de la face interne du manchon (3) comprend une couche de matière adhérente, notamment une couche de matière ayant un coefficient de frottement supérieur ou égal à 0,5.

7. Ensemble pour plante selon la revendication 6, ***dans lequel*** la face interne de la bande longitudinale de matière déformable à retour de forme (312) comprend une couche de matière adhérente, notamment une couche de matière ayant un coefficient de frottement supérieur ou égal à 0,5.

8. Ensemble pour plante selon l'une quelconque des revendications 1 à 7, ***dans lequel*** le manchon (3) est dépourvu de fond.

9. Ensemble pour plante selon l'une quelconque des revendications 1 à 8, ***dans lequel*** la bande de matériau sensiblement non déformable (311) et la bande longitudinale de matière déformable à retour de forme (312) sont fixées ensemble par collage, soudage ou couture.

10. Ensemble pour plante selon l'une quelconque des revendications 1 à 9, ***dans lequel*** le récipient (1) et le manchon (3) sont de forme tronconique.
